# EUROPÄISCHE PATENTSCHRIFT

(11) **EP 4 463 344 B1**
(45) Veröffentlichungstag und Bekanntmachung des Hinweises auf die Patenterteilung: **12.08.2026**
(21) Anmeldenummer: 22809894.3
(22) Anmeldetag: 04.11.2022
(51) Int. Cl.: B60T 15/02

(54) **ELEKTROMECHANISCH BETÄTIGBARES DRUCKMITTELSTEUERVENTIL**
ELECTROMECHANICALLY ACTUATED PRESSURE CONTROL VALVE
VALVE ÉLECTRO-MÉCANIQUE DE CONTRÔLE DE PRESSION

(30) Priorität: 11.01.2022 DE 102022200173
(43) Veröffentlichungstag der Anmeldung: 20.11.2024
(73) Patentinhaber: Robert Bosch GmbH, 70442 Stuttgart (DE)
(72) Erfinder: SCHUBITSCHEW, Valentin, 71732 Tamm (DE); EDELMANN, Volker, 74722 Buchen (DE); GARDT, Andrej, 74232 Abstatt (DE)
(86) Internationale Anmeldenummer: PCT/EP2022/080769
(87) Internationale Veröffentlichungsnummer: WO 2023/134897

(56) Entgegenhaltungen:
- EP-A1- 1 582 792
- DE-A1- 102011 081 646
- DE-A1- 102011 087 896
- DE-A1- 102015 218 263
- DE-A1- 102016 204 788
- DE-A1- 102016 216 347
- DE-T2- 69 110 311

## Beschreibung

### Stand der Technik

Die Erfindung betrifft ein elektromechanisch betätigbares Druckmittelsteuerventil nach den Merkmalen des Oberbegriffs des Anspruchs 1.

Derartige Druckmittelsteuerventile sind beispielsweise aus der DE 102015218263 A1 oder aus der DE 102017213341 A1 bereits bekannt. Beide bekannten Druckmittelsteuerventile gestatten keine unterschiedliche Bedrosselung eines Druckmittelstroms zwischen einer ersten Ventilöffnung und einer zweiten Ventilöffnung in Abhängigkeit einer Strömungsrichtung des Druckmittelstroms durch das Druckmittelsteuerventil bzw. weisen keine dahingehend wirksamen Mittel auf.

Bei dem bekannten Druckmittelsteuerventil nach der DE 102017213341 A1 handelt es sich exemplarisch um ein 2-stufiges Schaltventil das im nicht bestromten Zustand geschlossen ist und eine Druckmittelverbindung zwischen zwei Ventilanschlüssen, also einem Zulauf und einem Ablauf sperrt. Eine Betätigung dieses Ventils erfolgt über eine elektrisch ansteuerbare Ventilspule. Diese Ventilspule erzeugt bei einer Bestromung ein Magnetfeld zur Betätigung eines Ankers. Der Anker führt daraufhin eine Hubbewegung in Richtung der Ventillängsachse aus.

Die Ankerbewegung wird in der einen Richtung von einem Polkern begrenzt, auf der dem Polkern gegenüberliegenden Seite des Ankers ist eine Ventilhülse angeordnet, an der ein Steuerquerschnitt des Druckmittelsteuerventils ausgebildet ist. Zu einer Steuerung dieses Steuerquerschnitts ist ein vom Anker betätigbarer Schließkörper vorgesehen.

Mehrstufige Ventile werden benötigt um hohe Volumenströme eines Druckmittels bei niedrigen Drücken oder um hohe Drücke zu steuern. Typischerweise öffnet bei diesen Ventilen zuerst eine Vorstufe mit relativ kleinem Steuerquerschnitt und erst im Anschluss daran eine Hauptstufe, die den maximalen Steuerquerschnitt des Druckmittelsteuerventils freigibt.

Beispielsweise in elektronisch druckregelbaren Fahrzeugbremsanlagen werden mehrstufige Ventile zur Steuerung einer Druckmittelverbindung zwischen einem Hauptbremszylinder und einem Pedalwegsimulator eingesetzt. Der Hauptbremszylinder dient in diesem Zusammenhang zur Erfassung eines Bremswunsches eines Fahrers eines Kraftfahrzeugs. Er ist dazu mit einem vom Fahrer betätigbaren Hebel oder Pedal gekoppelt. Ein zum Bremswunsch korrelierender Betätigungsweg wird messtechnisch erfasst und einem elektronischen Steuergerät übermittelt. Dieses verarbeitet die eingehenden Signale zu Ansteuersignalen für einen elektrisch angetriebenen Druckerzeuger weiter, welcher daraufhin den gewünschten Bremsruck bereitstellt.

Das mit der Betätigung aus dem Hauptbremszylinder verdrängte Druckmittel gelangt zum Pedalwegsimulator und wird dort bis zum Ende des Bremsvorgangs gepuffert. Der Pedalwegsimulator seinerseits beaufschlagt das Pedal oder den Hebel im Gegenzug mit einer zum Betätigungsweg proportionalen Gegenkraft, welche vom Fahrer als haptische Rückmeldung über einen erfolgten Druckaufbau wahrnehmbar ist.

In der Praxis treten vermehrt Fälle auf, bei denen in Abhängigkeit einer Durchströmungsrichtung durch das Druckmittelsteuerventil unterschiedlich große Volumenströme zu steuern sind. Das wird bislang durch einen zum Druckmittelsteuerventil parallelen und von einem Rückschlagventil gesteuerten Strömungspfad, einem sogenannten steuerbaren Bypass, erreicht.

Nachteilig an dieser Lösung ist allerdings, der zusätzliche Bauraumbedarf für den parallelen Strömungspfad sowie die Kosten für das erforderliche Rückschlagventil und dessen Montage. Darüber hinaus sind mehrstufige Druckmittelsteuerventile aufgrund der Anzahl ihrer Dichtstellen teurer in der Herstellung und weisen potenziell höhere Leckagen als einstufige Ventile auf.

### Vorteile der Erfindung

Ein elektromechanisch betätigbares Druckmittelsteuerventil nach den Merkmalen des Anspruchs 1 weist demgegenüber den Vorteil auf, dass es in Abhängigkeit der Strömungsrichtung, in der es von einem Druckmittel durchströmt wird, eine unterschiedlich starke Bedrosselung des Druckmittelstroms ermöglicht. Ein zum Druckmittelsteuerventil paralleler Strömungspfad ist dazu nicht erforderlich und auf ein Rückschlagventil zu einer Steuerung der Durchströmungsrichtung dieses Strömungspfads kann ebenfalls verzichtet werden.

Weitere Vorteile oder vorteilhafte Weiterbildungen der Erfindung ergeben sich aus den Unteransprüchen oder aus der nachfolgenden Beschreibung.

Bevorzugt ist das Druckmittelsteuerventil mit einem Schließkörper ausgestattet, der über eine Fesseleinrichtung mit dem Anker gekoppelt ist. Die Fesseleinrichtung gestattet eine Bewegung des Schließkörpers relativ zum Anker in oder entgegen der Hubrichtung.

Das erfindungsgemäße Druckmittelsteuerventil kommt aufgrund dieser Merkmale mit einem einzelnen Steuerquerschnitt bzw. einer einzelnen Dichtstelle aus, ist damit kostengünstiger herstellbar und zeichnet sich durch eine geringe Leckage aus.

In einer besonders vorteilhaften Ausbildung umfasst die Fesseleinrichtung eine becherförmig gestaltete Ankerkapsel in welcher der Schließkörper verschiebbar aufgenommen ist. Eine solche Ankerkapsel ist kostengünstig herstellbar, vorzugsweise umformtechnisch. Über einen Becherrand lässt sich die Ankerkapsel auf einfache Weise kraftschlüssig am Anker befestigen.

Der Schließkörper seinerseits ist bevorzugt als Stößel mit einem Stößelschaft und einem den Steuerquerschnitt des Druckmittelsteuerventils steuernden Stößelkopf ausgebildet. Der Stößelkopf steht aus einem Durchbruch an einem Becherboden der Ankerkapsel vor. Vom Stößelschaft steht in radialer Richtung ein mechanischer Anschlag ab, durch welchen eine Hubbewegung des Schließkörpers in einer ersten Richtung vom Anker und in der dazu entgegengesetzten Richtung vom Boden der Ankerkapsel begrenzt ist.

Das dem Stößelkopf gegenüberliegende Ende des Stößelschafts ist in einer am Anker vorgesehenen Schließkörperführung aufgenommen. Über einen am Anker ausgebildeten Druckmittelkanal ist diese Schließkörperführung mit einem der Ventilöffnungen des Druckmittelsteuerventils kontaktiert und der Schließkörper dadurch in Richtung des Steuerquerschnitts druckbeaufschlagt.

### Zeichnung

Ein Ausführungsbeispiel der Erfindung ist in der Zeichnung dargestellt und wird in der nachfolgenden Beschreibung detailliert erläutert.

Die Zeichnung umfasst insgesamt 3 Figuren, welche ein erfindungsgemäßes Druckmittelsteuerventil jeweils im Längsschnitt darstellen. Einander entsprechende Bauteile sind in den Figuren mit einheitlichen Bezugszeichen versehen.
- Figur 1: zeigt das Druckmittelsteuerventil in der Sperrstellung;
- Figur 2: zeigt das Druckmittelsteuerventil nach Fig.1 in einer ersten Durchlassstellung, in welcher ein Druckmittel in einer ersten Strömungsrichtung durch das Druckmittelsteuerventil hindurchströmt und
- Figur 3: zeigt das Druckmittelsteuer in einer zweiten Durchlassstellung, in der das Druckmittel entgegengesetzt zur ersten Strömungsrichtung strömt.

In den Figuren ist lediglich der druckmittelführende Teil eines Druckmittelsteuerventils dargestellt. Von einer Darstellung einer elektrisch ansteuerbaren Ventilspule zur Betätigung des Ankers wurde abgesehen.

### Beschreibung des Ausführungsbeispiels

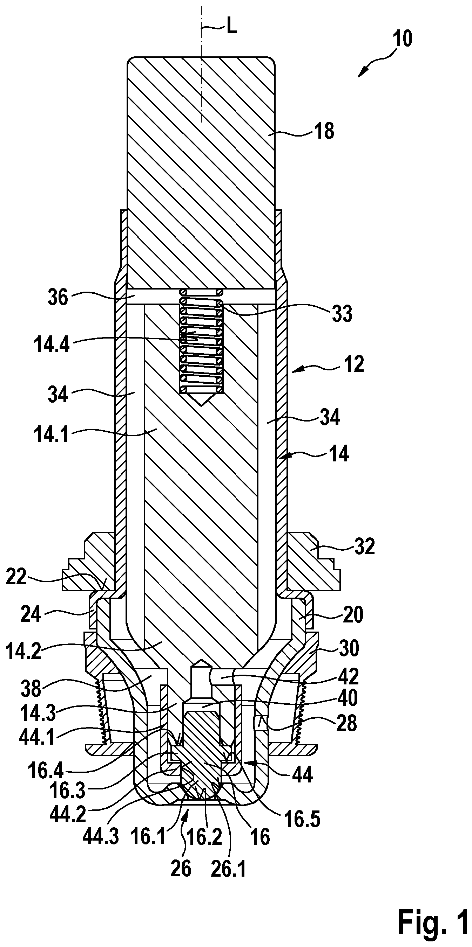

Der in der Figur 1 dargestellte druckmittelführende Teil eines Druckmittelsteuerventils 10 besteht u.a. aus einem hülsenförmigen Ventilgehäuse 12, einem im Inneren dieses Ventilgehäuses 12 aufgenommenen und in Richtung einer Ventillängsachse L verschiebbar geführten Anker 14, einem erfindungsgemäß an den Anker 14 gefesselten Schließkörper 16, einem das Ventilgehäuse 12 an einem Ende verschließenden Polkern 18 sowie aus einer Ventilhülse 20, welche dem Polkern 18 gegenüberliegend am Ventilgehäuse 12 angeordnet ist.

Das Ventilgehäuse 12 ist ein schlankes, hohlzylindrisches Bauteil, das an seinem der Ventilhülse 20 zugewandten Ende im Umfang einmal stufenartig aufgeweitet ist. Die Aufweitung bildet eine radial vom Ventilgehäuse 12 abstehende Schulter 22 aus, die an ihrem äußeren Ende in einen Ringbund 24 übergeht. Dieser Ringbund 24 erstreckt sich in Richtung der Ventillängsachse L und umschließt eines der offenen Enden des Ventilgehäuses 12. In dieses offene Ende ist die Ventilhülse 20 bis auf Anschlag an der Innenseite der Schulter 22 eingeführt. Der Ringbund 24 umgibt einen zugewandten Abschnitt der Ventilhülse 20 und geht mit dieser eine kraftschlüssige Verbindung ein. Ventilhülse 20 und Ventilgehäuse 12 sind dementsprechend zu einer Baueinheit miteinander verbunden.

Die Ventilhülse 20 schnürt sich in Richtung ihres vom Ventilgehäuse 12 abgewandten Endes flaschenhalsförmig ein und endet in einer Stirnfläche, an der eine erste Ventilöffnung 26 ausgebildet ist. Diese erste Ventilöffnung 26 ist zentrisch zur Ventillängsachse L angeordnet und bildet einen zum Inneren des Ventilgehäuses 12 hin gerichteten Steuerquerschnitt 26.1 des Druckmittelsteuerventils 10 aus. Der Steuerquerschnitt 26.1 ist beispielhaft als konischer Ventilsitz ausgeführt und wird in der Darstellung nach Fig. 1 durch den anliegenden Schließkörper 16 verschlossen. Ein Flach- oder Kugelsitz wäre ebenso vorstellbar.

Eine zweite Ventilöffnung 28 ist als Zylinderbohrung am Hals der Ventilhülse 20 ausgebildet. Die zweite Ventilöffnung 28 befindet sich in einem Bereich, an dem am Außenumfang der Ventilhülse 20 ein Ringfilter 30 angebracht ist, so dass der zweiten Ventilöffnung 28 zu- bzw. aus der zweiten Ventilöffnung 28 abströmendes Druckmittel von Verunreinigungen gefiltert werden kann.

Auf den zylindrischen Abschnitt des Ventilgehäuses 12 ist ein Verstemmring 32 aufgefädelt. Dieser Verstemmring 32 liegt auf der Außenseite der Schulter 22 am Ventilgehäuse 12 auf und dient dazu, das Druckmittelsteuerventil 10 in einer vorgesehenen Ventilaufnahme eines Gehäuseblocks (jeweils nicht gezeigt) niederzuhalten. Eine Umfangskontur des Verstemmrings 32 ist für dessen Verstemmung mit dem Gehäuseblock ausgebildet. Dabei wird mittels eines Vestemmwerkzeugs Material des Gehäuseblocks plastisch derart verformt, dass dieses verstemmte Material den Verstemmring 32 wenigstens abschnittsweise überdeckt.

Das Ventilgehäuse 20 steht mit seinem gemäß Fig.1 oberhalb des Verstemmrings 32 liegenden Gehäuseabschnitt über eine Anbaufläche des Gehäuseblocks vor. An diesem vorstehenden Ende ist der Polkern 18 abschnittsweise in das Ventilgehäuse 12 eingeführt und daran befestigt. Eine in das Innere des Ventilgehäuses 12 hineinragende Stirnfläche des Polkerns 18 dient einer Ventilfeder 33 als erste Abstützung. Diese Ventilfeder 33 erstreckt sich bis in eine sacklochförmige Ventilfederaufnahme 14.4 des Ankers 14 hinein und ist dort zum zweiten Mal abgestützt. Der Anker 14 liegt dem Polkern 18 unmittelbar gegenüber.

Der Anker 14 gliedert sich in Richtung der Ventillängsachse L in mehrere aufeinanderfolgende Längsabschnitte. Über einen Führungsabschnitt 14.1 ist der Anker 14 an der Innenwand des Ventilgehäuses 12 axial geführt. An diesem Führungsabschnitt 14.1 sind umfangsseitig mehre durchgehende und nach außen offene Längskanäle 34 ausgebildet, durch die ein Druckmittel in einen Ankerraum 36, der zwischen dem Polkern 18 und dem Anker 14 ausgebildet ist, gelangt.

Der Führungsabschnitt 14.1 erstreckt sich bis in das Innere der Ventilhülse 20 hinein, geht dort in einen Übergangsabschnitt 14.2 des Ankers 14 über und endet an einem Zylinderabschnitt 14.3. Dieser Zylinderabschnitt 14.3 weist eine Außenabmessung auf, die deutlich kleiner ist als die Außenabmessung des Führungsabschnitts 14.1. Zwischen einer Innenwand der Ventilhülse 20 und einer Umfangsfläche des Ankers 14 im Bereich des Übergangsabschnitts 14.2 und des Zylinderabschnitts 14.3 besteht ein mit Druckmittel befüllter Ventilraum 38, in den die oben erwähnten Längskanäle 34 am Führungsabschnitt 14.1 münden.

Im Zentrum des Zylinderabschnitts 14.3 ist eine Schließkörperführung 40 am Anker 14 ausgebildet. Diese Schließkörperführung 40 umfasst eine in ihrem Innendurchmesser von außen nach innen abgestufte Sacklochbohrung, welche über einen beispielhaft quer zur ihr verlaufenden Druckmittelkanal 42 mit dem Ventilraum 38 verbunden ist. Weil in den Ventilraum 38 auch die am Halsabschnitt der Ventilhülse 20 ausgebildete zweite Ventilöffnung 28 einmündet besteht zwischen der Schließkörperführung 40 und dieser zweiten Ventilöffnung 28 eine druckmittelleitende Verbindung.

In der Schließkörperführung 40 ist der Schließkörper 16 des Druckmittelsteuerventils 10 axial, d.h. in Richtung der Ventillängsachse L, verschiebbar geführt. Beim Schließkörper 16 handelt es sich um einen Stößel mit einem zylindrischen Stößelschaft 16.1 und einem sphärisch gekrümmten Stößelkopf 16.2, welcher an einem der Enden dieses Stößelschafts 16.1 ausgebildet ist. Dieser Stößelkopf 16.2 verschließt gemäß Fig. 1 den Steuerquerschnitt 26.1 des Druckmittelsteuerventils 10, während der Schließkörper 16 mit einem dem Anker zugewandten Endabschnitt des Stößelschafts 16.1 in der Schließkörperführung 40 verschiebbar aufgenommen ist.

Etwa in der der Mitte des zylindrischen Stößelschafts 16.1 ist ein radial abstehender Axialanschlag 16.3 ausgebildet. Dieser Axialanschlag 16.3 ist als umlaufender Ringwulst mit zwei einander planparallel gegenüberliegen Anschlagflächen 16.4, 16.5 ausgeführt. Eine erste Anschlagfläche 16.4 liegt in der Fig.1 an der Stirnseite des Zylinderabschnitts 16.3 des Ankers 16 an. Die dazu gegenüberliegende zweite Anschlagfläche 16.5 des Schließkörpers 16 ist der Innenseite einer Ankerkapsel 44 zugeordnet, durch welche der Schließkörper 16 relativbeweglich an den Anker 14 gefesselt ist.

Diese Ankerkapsel 44 bildet eine becherförmig ausgebildete Fesseleinrichtung mit einem umlaufenden Becherrand 44.1 sowie einem einstückig mit diesem Becherrand 44.1 ausgebildeten Becherboden 44.2 aus. Der Becherboden 44.2 ist mit einem Durchbruch 44.3 versehen, durch die der Schließköper 16 mit seinem den Stößelkopf 16.2 aufweisenden Endabschnitt aus der Ankerkapsel 44 vorsteht und unmittelbar mit dem Steuerquerschnitt 26.1 des Druckmittelventils 10 zusammenwirkt. Die Abmessungen des Durchbruchs 44.3 sind größer bemessen als der Außenabmessungen des Stößelschafts 16.1.

Die Ankerkapsel 44 ist über ihren Becherrand 44.1 kraftschlüssig am Umfang des Zylinderabschnitts 14.3 des Ankers 14 derart festgelegt, dass der im Inneren der Ankerkapsel 44 aufgenommene Schließkörper 16 sich relativ zum Anker 14 in Richtung der Ventillängsachse L bewegen kann. Dazu ist die Ankerkapsel 44 nur soweit auf den Zylinderabschnitt 14.3 aufgeschoben, dass sich ein Abstand zwischen der Stirnseite des Ankers 14 und der Innenseite des Becherbodens 44.1 einstellt, der größer ist als die Abmessungen des in diesem Abstand einliegenden Axialanschlags 16.3 des Schließkörpers 16.

Fig.1 zeigt das erläuterte Druckmittelsteuerventil 10 in der Sperrstellung, d.h. eine Druckmittelverbindung zwischen der ersten Ventilöffnung 26 und der zweiten Ventilöffnung 28 ist unterbrochen und das Druckmittelventil 10 wird folglich nicht von Druckmittel durchströmt. Dazu greift der Anker 14, bedingt durch die Kraft der Ventilfeder 33, mit seiner Stirnseite an der zugeordneten ersten Anschlagfläche 16.4 am Axialanschlag 16.3 des Schließkörpers 16 an und drückt diesen gegen den Steuerquerschnitt 26.1. Der Schließkörper 16 bewegt sich dabei innerhalb der Ankerkapsel 44 auf den Anker 14 zu, so dass die Innenseite der Becherbodens 44.2 und die zugewandte zweite Anschlagfläche 16.5 des Schließkörpers 16 nicht länger aneinander anliegen, sondern nunmehr voneinander beabstandet sind.

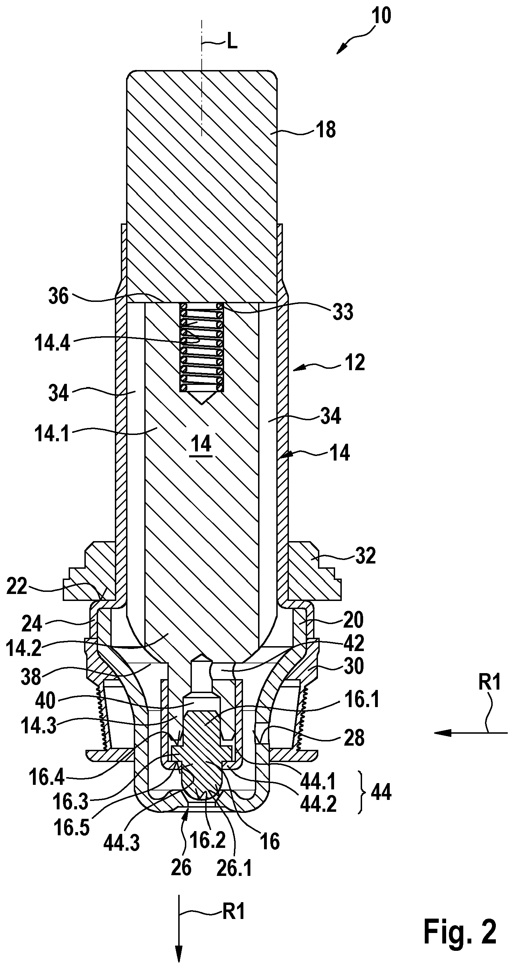

Die Fig.2 zeigt das Druckmittelsteuerventil 10 nach Fig.1 in der Durchlassstellung. In dieser Durchlassstellung liegt der Anker 14 flächenbündig an der Stirnseite des Polkers 18 an und das Volumen des Ankerraus 36 zwischen Polkern 18 und Anker 14 ist auf nahezu Null zurückgegangen. Mit der Hubbewegung des Ankers 14 in Richtung des Pokerns 18 hat sich die Federspannung erhöht, mit welcher der Anker 14 von der Ventilfeder 33 belastet ist. Die Ankerkapsel 44 ist aufgrund ihrer axialfesten Anordnung am Anker 14 der Hubbewegung gefolgt. Dadurch ist der Becherboden 44.2 der Ankerkapsel 44 mit der zugewandten zweiten Anschlagfläche 16.5 des Schließkörpers 16 in Eingriff gelangt. Mit einem Fortschreiten der Hubbewegung des Ankers 14 hat die Ankerkapsel 44 den Schließköper 16 von der ersten Ventilöffnung 26 des Druckmittelsteuerventils 10 abgehoben, wodurch der Steuerquerschnitt 26.1 freigegeben worden ist. Mit der Öffnung des Steuerquerschnitts 26.1 wurde zwischen der ersten Ventilöffnung 26 und der zweiten Ventilöffnung 28 eine Druckmittelverbindung geschaffen.

Gemäß Fig.2 liegt die zweite Anschlagsfläche 16.5 des Schließkörpers 16 an der Innenseite des Becherbodens 44.2 an, während die erste Anschlagsfläche 16.4 von der Stirnseite des Ankers 14 abgehoben ist. Diese Position nimmt der Schließkörper 16 ein, wenn an der zweiten Ventilöffnung 28 und folglich im Inneren der Schließkörperführung 40 des Ankers 14 ein höheres Druckniveau vorherrscht als im Bereich der ersten Ventilöffnung 26. Folglich wird das in der Fig.2 dargestellte Druckmittelsteuerventil 10 von der zweiten Ventilöffnung 28 in Richtung der ersten Ventilöffnung 26 durchströmt, wie es die Richtungspfeile R1 veranschaulichen. Der Schließkörper 16 befindet sich dabei mit seinem Stößelkopf 16.2 relativ nahe am Steuerquerschnitt 26.1 und übt demzufolge eine entsprechende Drosselwirkung auf den Druckmittelstrom aus. Diese Drosselwirkung begrenzt den Durchsatz von Druckmittel in der gegebenen Strömungsrichtung.

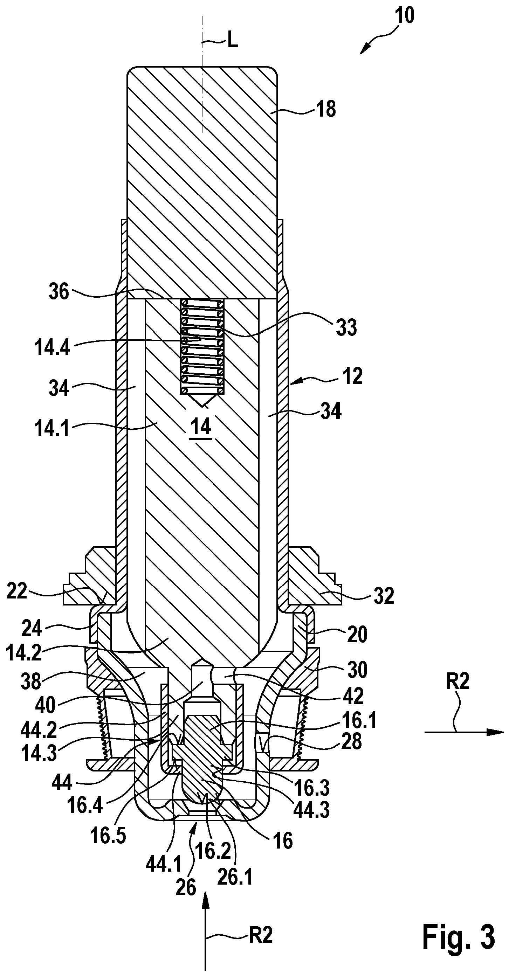

Fig.3 zeigt das Druckmittelsteuerventil 10 erneut in der Durchlassstellung, jedoch liegt dabei der Schließkörper 16 mit seinem Axialanschlag 16.3 am Anker 14 an bzw. ist von der Innenseite des Becherbodens 44.2 abgehoben. Diese Position nimmt der Schließkörper 16 ein, wenn das Druckniveau an der ersten Ventilöffnung 26 höher als an der zweiten Ventilöffnung 28 bzw. in der Schließkörperführung 40 ist. Eine Durchströmung des Druckmittelventils 10 erfolgt demgemäß in Fig.3 von der ersten Ventilöffnung 26 in Richtung der zweiten Ventilöffnung 28 (Richtungspfeile R2) und damit entgegengesetzt zur Strömungsrichtung nach Fig.2.

Der Stößelkopf 16.2 des Schließkörpers 16 ist in der Ventilstellung nach Fig.3 maximal weit vom Steuerquerschnitt 26.1 entfernt und hat damit auf den Druckmittelstrom durch das Druckmittelsteuerventil 10 lediglich eine geringe Drosselwirkung. Folglich strömt pro Zeiteinheit in der Ventilstellung nach Fig.3 mehr Druckmittel durch das Druckmittelsteuerventil 10 als in der Ventilstellung nach Fig.2. Auf diese Weise ist das Druckmittelsteuerventil 10 für eine unterschiedliche Bedrosselung eines Druckmittelstroms zwischen der ersten Ventilöffnung 26 und der zweiten Ventilöffnung 28 in Abhängigkeit der Strömungsrichtung R1, R2 des Druckmittelstroms durch das Druckmittelsteuerventil 10 ausgebildet.

Für einen Wechsel von der Sperrstellung nach Fig.1 in eine Durchlassstellung nach Fig.2 oder Fig.3 ist das Druckmittelsteuerventil 10 mit einer nicht gezeigten Ventilspule ausgestattet. Diese Ventilspule umgibt den zylindrischen Teil des Ventilgehäuses 12 und erzeugt im Falle ihrer elektrischen Ansteuerung ein Magnetfeld. Polkern 18, Ventilgehäuse 12 und Anker 14 sind aus magnetisch leitendem Material hergestellt, so dass sich an den einander gegenüberliegenden Stirnflächen von Polkern 18 und Anker 14 folglich die beiden Pole dieses Magnetfeldes ausbilden. Zwischen beiden Bauteilen stellen sich mit einer Bestromung der Magnetspule demnach Anziehungskräfte ein, welche die erläuterte Hubbewegung des Ankers 14 in Richtung des Polkerns 18 auslösen.

Mit einer Zurücknahme der elektrischen Ansteuerung der Ventilspule gehen diese Anziehungskräfte zurück, so dass die Federspannung der Ventilfeder 33 ausreicht um den Anker 14 sowie den daran gefesselten Schließkörper 16 zurück in die in Fig.1 gezeigte Grundstellung zu verbringen.

Selbstverständlich sind Änderungen oder Ergänzungen am beschriebenen Ausführungsbeispiel denkbar, ohne dass die sich dadurch ergebenden Erzeugnisse den durch die Ansprüche festgelegten Schutzbereich verlassen.

Es sei in diesem Zusammenhang darauf hingewiesen, dass das erläuterte Druckmittelsteuerventil 10 lediglich beispielhaft als normal geschlossenes Ventil offenbart worden ist. Eine normal offene Variante wäre entsprechend umsetzbar. Darüber hinaus ist es für die Erfindung nicht zwangsweise notwendig das Druckmittelsteuerventil 10 mit einer Ventilspule als Aktuator auszustatten.

## Patentansprüche

1. Elektromechanisch betätigbares Druckmittelsteuerventil mit einem Ventilgehäuse (12), in dem ein zu einer Hubbewegung in Richtung einer Ventillängsachse (L) antreibbarer Anker (14) beweglich aufgenommen ist,
einem die Ankerbewegung in eine Bewegungsrichtung begrenzenden Polkern (18),
einer Ventilhülse (20) mit einem daran ausgebildeten Steuerquerschnitt (26.1) und
einem, einen Druckmittelstrom durch den Steuerquerschnitt (26.1) steuernden und vom Anker (14) betätigbaren Schließkörper (16),
**dadurch gekennzeichnet,**
**dass** das Druckmittelsteuerventil (10) zu einer unterschiedlichen Bedrosselung eines Druckmittelstroms zwischen einer ersten Ventilöffnung (26) und einer zweiten Ventilöffnung (28) in Abhängigkeit einer Strömungsrichtung (R1, R2) des Druckmittelstroms durch das Druckmittelventil (10) ausgebildet ist,
indem der Anker (14) mit einer Schließkörperführung (40) ausgestattet ist, in welcher der Schließkörper (16) mit einem dem Anker (14) zugewandten Endabschnitt eines Stößelschafts (16.1) verschiebbar aufgenommen ist und wobei die Schließkörperführung (40) über einen am Anker (14) ausgebildeten Druckmittelkanal (42) mit einer der Ventilöffnungen (26, 28) des Druckmittelsteuerventils (10) druckmittelleitend kontaktiert ist.

2. Elektromechanisches betätigbares Druckmittelsteuerventil nach Anspruch 1, **dadurch gekennzeichnet,**
**dass** der Schließkörper (16) durch eine Fesseleinrichtung mit dem Anker (14) gekoppelt ist,
wobei die Fesseleinrichtung eine Bewegung des Schließkörpers (16) relativ zum Anker (14) in oder entgegen der Hubrichtung des Ankers (14) gestattet.

3. Elektromechanisch betätigbares Druckmittelsteuerventil nach Anspruch 1 oder 2, **dadurch gekennzeichnet,**
**dass** die Fesseleinrichtung eine am Anker festgelegte Ankerkapsel (44) umfasst, in welcher der Schließkörper (16) verschiebbar aufgenommen ist.

4. Elektromechanisch betätigbares Druckmittelsteuerventil nach Anspruch 3, **dadurch gekennzeichnet,**
**dass** die Ankerkapsel (44) becherförmig gestaltet ist, durch einen Becherrand (44.1) an einem Außenumfang des Ankers (14) fest verankert ist und einen Becherboden (44.2) mit einem Durchbruch (44.3) aufweist.

5. Elektromechanisch betätigbares Druckmittelsteuerventil nach Anspruch 4, **dadurch gekennzeichnet,**
**dass** der Schließkörper (16) ein Stößel mit einem Stößelschaft (16.1) und einem Stößelkopf (16.2) ist, wobei der Stößel mit einem den Stößelkopf (16.2) aufweisenden Endabschnitt durch den Durchbruch (44.3) vorsteht und mit dem Steuerquerschnitt (26.1) unmittelbar zusammenwirkt.

6. Elektromechanisch betätigbares Druckmittelsteuerventil nach Anspruch 5, **dadurch gekennzeichnet,**
**dass** am Stößelschaft (16.1) ein radial abstehender Axialanschlag (16.3) ausgebildet ist.

7. Elektromechanisch betätigbares Druckmittelsteuerventil nach Anspruch 6, **dadurch gekennzeichnet,**
**dass** der Axialanschlag (16.3) ein umlaufender Ringwulst mit einander gegenüberliegen Anschlagflächen (16.4, 16.5) ist, wobei eine erste Anschlagfläche (16.4) einer Stirnseite des Ankers (14) und eine zweite Anschlagfläche (16.5) einem Bereich der Ankerkapsel (44) zugewandt ist, welcher den Durchbruch (44.3) umschließt.

8. Elektromechanisch betätigbares Druckmittelsteuerventil nach einem der Ansprüche 1 bis 7, **dadurch gekennzeichnet,**
**dass** der Anker (14) von einer Ventilfeder (33) beaufschlagt ist und
**dass** das Druckmittelsteuerventil (10) durch elektrische Ansteuerung aus einer Grundstellung, in welcher eine Druckmittelverbindung zwischen der ersten Ventilöffnung (26) und der zweiten Ventilöffnung (28) unterbrochen ist, in eine Durchlassstellung umschaltbar ist.

9. Elektromechanisch betätigbares Druckmittelsteuerventil nach einem der Ansprüche 1 bis 8, **dadurch gekennzeichnet,**
**dass** das Druckmittelsteuerventil (10) in einer elektronisch druckregelbaren Fahrzeugbremsanlage eine zwischen einem Hauptbremszylinder und einem Pedalwegsimualtor vorgesehene Druckmittelverbindung steuert.

## Claims

1. Electromechanically actuatable pressure-medium control valve having a valve housing (12) in which an armature (14) able to be driven to perform a stroke movement in the direction of a valve longitudinal axis (L) is received movably,
a pole core (18) which limits the armature movement in a movement direction,
a valve sleeve (20) with a control cross section (26.1) formed thereon, and a closing body (16) which controls a pressure-medium stream through the control cross section (26.1) and is able to be actuated by the armature (14), **characterized**
**in that** the pressure-medium control valve (10) is configured for different throttling of a pressure-medium stream between a first valve opening (26) and a second valve opening (28) according to a flow direction (R1, R2) of the pressure-medium stream through the pressure-medium valve (10),
**in that** the armature (14) is equipped with a closing-body guide (40) in which the closing body (16) is received displaceably at an end portion, close to the armature (14), of a ram shaft (16.1), and wherein the closing-body guide (40) is in contact in a pressure-medium-conducting manner with one of the valve openings (26, 28) of the pressure-medium control valve (10) via a pressure-medium channel (42) formed at the armature (14).

2. Electromechanical actuatable pressure-medium control valve according to Claim 1, **characterized**
**in that** the closing body (16) is coupled to the armature (14) by a restraining device,
wherein the restraining device allows a movement of the closing body (16) relative to the armature (14) in or counter to the stroke direction of the armature (14).

3. Electromechanically actuatable pressure-medium control valve according to Claim 1 or 2, **characterized**
**in that** the restraining device comprises an armature capsule (44) which is fixed to the armature and in which the closing body (16) is received displaceably.

4. Electromechanically actuatable pressure-medium control valve according to Claim 3, **characterized**
**in that** the armature capsule (44) is of cup-shaped design, is anchored firmly to an outer periphery of the armature (14) by way of a cup rim (44.1) and has a cup base (44.2) with an aperture (44.3).

5. Electromechanically actuatable pressure-medium control valve according to Claim 4, **characterized**
**in that** the closing body (16) is a ram with a ram shaft (16.1) and with a ram head (16.2), wherein the ram projects through the aperture (44.3), and interacts directly with the control cross section (26.1), at an end portion having the ram head (16.2).

6. Electromechanically actuatable pressure-medium control valve according to Claim 5, **characterized**
**in that** a radially projecting axial stop (16.3) is formed on the ram shaft (16.1).

7. Electromechanically actuatable pressure-medium control valve according to Claim 6, **characterized**
**in that** the axial stop (16.3) is an encircling annular bead with mutually opposite stop surfaces (16.4, 16.5), wherein a first stop surface (16.4) faces towards an end face of the armature (14) and a second stop surface (16.5) faces towards a region of the armature capsule (44) that surrounds the aperture (44.3).

8. Electromechanically actuatable pressure-medium control valve according to one of Claims 1 to 7, **characterized**
**in that** the armature (14) is acted on by a valve spring (33), and
**in that**, by way of electrical actuation, the pressure-medium control valve (10) is switchable from a home position, in which a pressure-medium connection between the first valve opening (26) and the second valve opening (28) is interrupted, into a pass-through position.

9. Electromechanically actuatable pressure-medium control valve according to one of Claims 1 to 8, **characterized**
**in that** the pressure-medium control valve (10) controls, in an electronically pressure-regulatable vehicle brake system, a pressure-medium connection provided between a master brake cylinder and a pedal travel simulator.

## Revendications

1. Soupape de commande de fluide sous pression à actionnement électromécanique
avec un boîtier (12) de soupape, dans lequel est logé de manière mobile un induit (14) pouvant être entraîné par rapport à un mouvement de levage en direction d'un axe longitudinal de soupape (L),
un noyau polaire (18) limitant le mouvement de l'induit selon une direction de déplacement,
un manchon (20) de soupape avec une section transversale de commande (26.1) formée sur celui-ci et
un corps de fermeture (16) commandant un débit de fluide sous pression à travers la section transversale de commande (26.1) et pouvant être actionné par l'induit (14),
**caractérisée en ce**
**que** la soupape de commande de fluide sous pression (10) est formée pour un étranglement différent d'un flux de fluide sous pression entre une première ouverture (26) de soupape et une deuxième ouverture (28) de soupape en fonction d'une direction d'écoulement (R1, R2) du flux de fluide sous pression à travers la soupape de fluide sous pression (10),
en ce que l'induit (14) est équipé d'un guide de corps de fermeture (40), dans lequel le corps de fermeture (16) est logé de manière à pouvoir coulisser avec une section d'extrémité d'une tige de poussoir (16.1) tournée vers l'induit (14) et le guide de corps de fermeture (40) étant amené en contact par un canal de fluide sous pression (42) formé sur l'induit (14) avec une des ouvertures (26, 28) de soupape de la soupape de commande de fluide sous pression (10) de manière à acheminer un fluide sous pression.

2. Soupape de commande de fluide sous pression à actionnement électromécanique
selon la revendication 1, **caractérisée en ce**
**que** le corps de fermeture (16) est couplé à l'induit (14) par un dispositif captif,
le dispositif captif permettant un déplacement du corps de fermeture (16) par rapport à l'induit (14) dans ou dans le sens opposé à la direction de levage de l'induit (14).

3. Soupape de commande de fluide sous pression à actionnement électromécanique
selon la revendication 1 ou 2, **caractérisée en ce**
**que** le dispositif captif comprend une capsule (44) d'induit fixée sur l'induit, dans laquelle le corps de fermeture (16) est logé de manière à pouvoir coulisser.

4. Soupape de commande de fluide sous pression à actionnement électromécanique
selon la revendication 3, **caractérisée en ce**
**que** la capsule (44) d'induit est conçue en forme de cuvette, est fermement ancrée par un bord de cuvette (44.1) sur une périphérie extérieure de l'induit (14) et comporte un fond de cuvette (44.2) avec un ajour (44.3).

5. Soupape de commande de fluide sous pression à actionnement électromécanique
selon la revendication 4, **caractérisée en ce**
**que** le corps de fermeture (16) est un poussoir avec une tige de poussoir (16.1) et une tête de poussoir (16.2), le poussoir faisant saillie avec une section d'extrémité comportant la tête de poussoir (16.2) à travers l'ajour (44.3) et coopérant directement avec la section transversale de commande (26.1).

6. Soupape de commande de fluide sous pression à actionnement électromécanique
selon la revendication 5, **caractérisée en ce**
**qu'**une butée axiale (16.3) dépassant radialement est formée sur la tige de poussoir (16.1).

7. Soupape de commande de fluide sous pression à actionnement électromécanique
selon la revendication 6, **caractérisée en ce**
**que** la butée axiale (16.3) est un bourrelet annulaire périphérique avec des surfaces de butée (16.4, 16.5) opposées les unes aux autres, une première surface de butée (16.4) étant tournée vers un côté frontal de l'induit (14) et une deuxième surface de butée (16.5) étant tournée vers une zone de la capsule (44) d'induit, qui entoure l'ajour (44.3).

8. Soupape de commande de fluide sous pression à actionnement électromécanique
selon l'une des revendications 1 à 7, **caractérisée en ce que** l'induit (14) est soumis à l'action d'un ressort de soupape (33) et
que la soupape de commande de fluide sous pression (10) peut être commutée par pilotage électrique depuis une position de départ, dans laquelle une liaison de fluide sous pression entre la première ouverture de soupape (26) et la deuxième ouverture de soupape (28) est interrompue, dans une position de passage.

9. Soupape de commande de fluide sous pression à actionnement électromécanique selon l'une des revendications 1 à 8, **caractérisée en ce que** la soupape de commande de fluide sous pression (10) commande dans une installation de freinage de véhicule à régulation de pression électronique une liaison de fluide sous pression prévue entre un maître-cylindre de frein et un simulateur de course de pédale.
